# EUROPÄISCHE PATENTSCHRIFT

(11) **EP 3 779 899 B1**
(45) Veröffentlichungstag und Bekanntmachung des Hinweises auf die Patenterteilung: **07.01.2026**
(21) Anmeldenummer: 19192085.9
(22) Anmeldetag: 16.08.2019
(51) Int. Cl.: G07C 9/00, G07C 9/27

(54) **KONTROLLVORRICHTUNG**
CONTROL DEVICE
SYSTÈME DE CONTRÔLE

(43) Veröffentlichungstag der Anmeldung: 17.02.2021
(73) Patentinhaber: EUCHNER GmbH + Co. KG, 70771 Leinfelden-Echterdingen (DE)
(72) Erfinder: Keller, Fabian, 72631 Aichtal (DE); Denk, Dimitri, 71036 Böblingen (DE)
(74) Vertreter: Ruckh, Rainer Gerhard

(56) Entgegenhaltungen:
- EP-A2- 0 539 763
- EP-A2- 1 288 870
- DE-A1- 10 152 349
- DE-A1- 10 360 789
- US-A1- 2008 218 330

## Beschreibung

Die Erfindung betrifft eine Anordnung mit einer Kontrollvorrichtung und einer ein System steuernden Steuerung.

Derartige Systeme bilden typischerweise Sicherheitssysteme, die im Bereich der Maschinensicherheit eingesetzt werden.

Ein derartiges Sicherheitssystem umfasst generell ein Steuerungssystem, das eine Maschine steuert, wobei mit dem Begriff Maschine auch Anlagen und dergleichen umfasst sind. Von der Maschine können Gefahren für Personen innerhalb eines Gefahrenbereichs ausgehen.

Als Sicherheitsmaßnahme wird dieser Gefahrenbereich überwacht, wobei die Maschine zur Kontrolle und Überwachung sicherheitsrelevanter Funktionen eine Sicherheitssteuerung als Steuerungssystem aufweist.

Beispielsweise ist der Gefahrenbereich der Maschine mit einer Schutzabdeckung oder Umzäunung gesichert. In der Umzäunung befindet sich dann eine Schutztür oder -klappe. Hier erfolgt eine Überwachung derart, dass eine Person nur dann über die Schutztür in den Gefahrenbereich gelangen kann, wenn von der Maschine keine Gefahren ausgehen können.

Als weiteres Sicherheitselement kann ein an das Steuerungssystem, das heißt die Sicherheitssteuerung angeschlossenes Zugangssystem vorgesehen sein, mittels dessen ein kontrollierter Zugang zu sicherheitsrelevanten Bereichen, insbesondere Gefahrenbereichen überwacht wird. Ein derartiges Zugangssystem kann beispielsweise von einem elektronischen Schlüsselsystem gebildet sein. Dieses elektronische Schlüsselsystem umfasst einen Schlüsseleinsatz und wenigstens einen diesem zugeordneten Schlüssel.

Die Auswertung der Daten des Zugangssystems muss in der Sicherheitssteuerung erfolgen. Hierfür ist eine entsprechende Programmierung der Sicherheitssteuerung erforderlich.

Bei derartigen Sicherheitssystemen sind weiterhin mehrere Betriebsarten möglich. Je nach Betriebsart kann die Maschine unterschiedlich betrieben werden und/oder die Überwachungsfunktion des Sicherheitssystems unterschiedlich ausgestaltet sein.

Ein Problem bei derartigen Sicherheitssystemen besteht darin, dass eine Umschaltung der Betriebsart aufgrund gesetzlicher Bestimmungen auf befugte Personen beschränkt werden muss. Zudem ist für die Umschaltung ein Sicherheitsniveau gefordert, das nicht mit beliebigen konventionellen Systemen erreicht werden kann, sondern den Einsatz von Sicherheitstechnik notwendig macht.

Bei bekannten Sicherheitssystemen ist daher deren Sicherheitssteuerung in die Betriebsartenauswahl miteinbezogen. Damit ist auch für die Betriebsartauswahl eine entsprechende Programmierung der Sicherheitssteuerung erforderlich.

Derartige Programmierungen einer Sicherheitssteuerung sind generell mit einem hohen Aufwand verbunden.

Typische Sicherheitssteuerungen, insbesondere für NC-Maschinen, sind jedoch nur mit kleinen Speichern versehen und erlauben derartige aufwändige Programmierungen nicht. Zudem muss hierfür ein sicherheitstechnisches, das heißt fehlergeprüftes Programm erstellt werden, welches aufwändig geprüft und validiert werden muss.

Die DE 101 52 349 A1 betrifft eine Sicherheitseinrichtung, die den kontrollierten Zugang oder Zugriff zu gefährdeten Sicherheitsbereichen von berechtigten Personen in einfacher Weise ermöglicht. Hierzu ist die Sicherheitseinrichtung mit einem Bussystem ausgestattet, dass eine zentrale Steuereinrichtung mit mehreren Aktoren verbindet, die jeweils mindestens einem der Sicherheitsbereiche zugeordnet sind. Mit Hilfe einer Personenidentifikationseinrichtung wird die Zugangsberechtigung überprüft und gesteuert.

Die EP 1 288 870 A2 betrifft eine Steuervorrichtung für Transportmittel bzw. Zutrittsmittel, sowie ein System zur Sicherheitskontrolle von Personen/Gütern bzw. zur Beförderung von Personen/Gütern. Dabei wird mindestens ein Antwortsignal von mindestens einem Identifikationsgeber ausgegeben. Dieses Antwortsignal wird von mindestens einer Erkennungsvorrichtung empfangen und von der Erkennungsvorrichtung mit einem Erkennungsprotokoll erkannt. Für ein erkanntes Antwortsignal wird ein Steuersignal gemäß eines Steuerprotokolls von der Erkennungsvorrichtung ausgegeben. Die Steuervorrichtung liest Steuersignale gemäß mindestens zweier unterschiedlicher Steuerprotokolle. Die Steuervorrichtung erkennt diese Steuersignale und gibt für ein erkanntes Steuersignal mindestens ein sekundäres Steuersignal aus.

Die EP 0 539 763 A2 betrifft eine Kontrollanlage, die als Zugangskontrolle verwendet wird, mit dem Ziel, nur berechtigte Personen den Zugang zu bestimmten Gebäuden oder Räumen zu ermöglichen. Die Kontrollanlage umfasst Datenträger (Transponder), die von den betreffenden Personen getragen und in die örtliche Nähe eines Lesers gebracht werden, so dass die Daten des Datenträgers drahtlos zum Lesen übertragen werden können. Der Leser leitet die empfangenen Berechtigungsdaten an eine zentrale Auswerteeinheit weiter, wo diese Berechtigungsdaten überprüft werden. Stimmen die Berechtigungsdaten mit den Prüfdaten überein, veranlasst die Auswerteeinheit die Freigabe einer Tür, so dass die berechtigte Person einen Raum betreten kann.

Die US 2008/0218330 A1 betrifft einen Power-Over-Ethernet Controller und ein Zugangskontrollsystem.

Die DE 103 60 789 A1 betrifft einen optischen Sensor zur Überwachung eines Erfassungsbereichs an einem Arbeitsmittel. Der Sensor weist eine redundante, zweikanalige Auswerteeinheit auf.

Der Erfindung liegt die Aufgabe zugrunde, auf möglichst sichere, einfache und flexible Weise Zugangsberechtigungen und Betriebsarten für Systeme, insbesondere Sicherheitssysteme zu vergeben.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Anordnung mit einer Kontrollvorrichtung und einer den Betrieb einer Maschine steuernden Sicherheitssteuerung, wobei die Kontrollvorrichtung eine Auswerteeinheit und wenigstens eine Erfassungseinheit, die an die Auswerteeinheit angeschlossen ist, aufweist. Die wenigstens eine Erfassungseinheit ist Bestandteil eines Zugangssystems. Die Erfassungseinheit ist eine Leseeinheit, welche zum Lesen von Signalen eines Transponders ausgebildet ist. Abhängig von in der Erfassungseinheit eingegebenen Eingabegrößen wird in der Auswerteeinheit eine Betriebsartauswahl durchgeführt und eine Zugangsberechtigung zugeteilt. Dadurch generierte Ausgangsgrößen werden über eine Ausgangsstufe der Kontrollvorrichtung an die Sicherheitssteuerung ausgegeben. Wenigstens eine Ein-/Ausgabeeinheit ist an die Auswerteeinheit angeschlossen. Das an die Auswerteeinheit der Kontrollvorrichtung angeschlossene Zugangssystem ist in die Betriebsartauswahl miteinbezogen, wobei das Zugangssystem ein physikalisches Zugangssystem ist, das den Zugang zu Gefahrenbereichen an Maschinen und Anlagen regelt und kontrolliert. Abhängig von Eingangsgrößen des Zugangssystems in der Auswerteeinheit wird eine Berechtigung zur Auswahl einer Betriebsart freigeschaltet, worauf dann ein Benutzer an der Ein-/Ausgabeeinheit die gewünschte Betriebsart eingeben kann. Eine von einem Benutzer in die Ein-/Ausgabeeinheit eingegebene Betriebsart wird in der Auswerteeinheit auf Gültigkeit geprüft. Hierzu wird eine über die Leseeinheit eingegebene und in der Auswerteeinheit freigeschaltete Berechtigung für eine Betriebsauswahl herangezogen. Die geprüfte Betriebsart wird von der Auswerteeinheit in die Ein-/Ausgabeeinheit rückgelesen, wo der Benutzer die eingegebene Betriebsart quittiert, wodurch eine sichere Betriebsartauswahl gewährleistet ist.

Der Grundgedanke der Erfindung besteht darin, dass die Kontrollvorrichtung eine eigenständige, von der Steuerung des Systems getrennte und unabhängige Einheit bildet, mit welcher einerseits die Funktion eines Zugangskontrollsystems und/oder andererseits die Funktion eines Betriebsartauswahl-Systems realisiert wird.

Da erfindungsgemäß diese Funktionalitäten aus der Steuerung des Systems herausverlagert sind, brauchen in der Steuerung für diese Funktionalitäten keinerlei Vorkehrungen oder Aufwendungen vorgesehen sein. Insbesondere entfallen aufwändige Programmierungen der Steuerung zur Realisierung derartiger Funktionalitäten. Vielmehr können eine ausgewählte Betriebsart oder auch vergebene Zugangsberechtigungen als Ergebnisse der Auswertung in der Kontrollvorrichtung in Form von Ausgangsgrößen der Steuerung zugeführt werden, wo diese direkt und ohne weitere Auswertungen genutzt werden können.

Erfindungsgemäß ist das System ein Sicherheitssystem, das von einer Sicherheitssteuerung gesteuert wird.

In diesem Fall entfällt eine aufwändige Erstellung von fehlergeprüften und zu validierenden Programmen, da die erforderliche Software zur Vergabe von Zugangsberechtigungen und/oder die Auswahl von Betriebsarten komplett in die Kontrollvorrichtung verlagert ist.

Zur Erfüllung der Sicherheitsanforderungen, das heißt zur Gewährleistung eines fehlersicheren Zugangskontrollsystems und einer fehlersicheren Betriebsartauswahl weist die Auswerteeinheit der Kontrollvorrichtung einen fehlersicheren, insbesondere redundanten Aufbau auf, was vorteilhaft dadurch realisiert wird, dass die Auswerteeinheit einen zweikanaligen Aufbau aufweist.

Weiterhin ist dann die Ausgangsstufe als sichere Ausgangsstufe ausgebildet, über welche eine sichere Signalausgabe an eine ein Sicherheitssystem steuernde Sicherheitssteuerung erfolgt.

Im einfachsten Fall besteht die sichere Ausgangsstufe aus einer Anzahl von digitalen Ausgängen.

Besonders vorteilhaft bildet die sichere Ausgangsstufe eine sichere bidirektionale Schnittstelle. Besonders zweckmäßig ist die sichere Ausgangsstufe in Form eines sicheren Bussystems ausgebildet.

Beispiele für derartige sichere Bussysteme sind Profisafe, IO-Link Safety oder CIP-Safety.

Erfindungsgemäß ist wenigstens eine Erfassungseinheit vorgesehen, welche Bestandteil eines Zugangssystems ist.

Der Begriff Zugangssystem umfasst dabei physikalische Zugangssysteme, die den Zugang zu Gefahrenbereichen an Maschinen und Anlagen regeln und kontrollieren. Des Weiteren umfasst der Begriff Zugangssystem auch Systeme, die den Zugriff zu gesicherten, insbesondere sicherheitsrelevanten Datensätzen wie zum Beispiel Prozess- oder Zugangsdaten, Zugriffsberechtigungen und dergleichen kontrollieren.

Erfindungsgemäß ist die oder jede ein Zugangssystem bildende Erfassungseinheit eine Leseeinheit, welche zum Lesen von Signalen eines Transponders ausgebildet ist.

Die die Erfassungseinheit bildende Leseeinheit und die deren zugeordneten Transponder bilden ein elektronisches Schlüsselsystem. Generell können bei einem derartigen elektronischen Schlüsselsystem einer Leseeinheit mehrere Transponder zugeordnet sein, in welchen unterschiedliche Daten abgespeichert sind.

In den Transpondern sind Datenfelder abgespeichert, wobei die Datenfelder vorzugsweise mit Prüfsummen abgesichert sind. Befindet sich ein Transponder im Lesebereich der Leseeinheit, werden die Datenfelder als Eingangsgrößen in die Leseeinheit eingelesen und auf Gültigkeit geprüft. Liegen gültige Eingangsgrößen vor, wird in der Auswerteeinheit eine Zugangs- oder eine Zugriffsberechtigung freigegeben.

Insbesondere ist es möglich unterschiedliche Berechtigungsstufen vorzusehen. So können zum Beispiel in den einzelnen Transpondern unterschiedliche Datenfelder gespeichert sein, die unterschiedliche Berechtigungsstufen definieren. Abhängig von den Berechtigungsstufen erfolgt in der Auswerteeinheit eine Freigabe eines der Berechtigungsstufe entsprechenden Zugangs oder Zugriffs.

So kann ein Benutzer mit einer geringen Berechtigungsstufe über eine Schutztür nur dann Zugang in einen Gefahrenbereich erhalten, wenn eine dort vorhandene Anlage stillsteht. Dagegen kann ein Benutzer mit einer hohen Berechtigungsstufe auch bei laufender Anlage Zugang zur Anlage erhalten, beispielsweise um Wartungsarbeiten durchzuführen.

Vorteilhaft ist die oder jede Erfassungseinheit über eine leitungsgebundene oder berührungslos arbeitende Schnittstelle mit der Auswerteeinheit verbunden.

Beispielsweise können diese Schnittstellen als RS485-, WLAN-, Ethernet-, Bluetooth- oder CAN-Bus-Schnittstellen ausgebildet sein.

Ein wesentlicher Vorteil dieser Schnittstellen besteht darin, dass die Position der jeweiligen Erfassungseinheit räumlich weitgehend unabhängig von der Auswerteeinheit der Kontrollvorrichtung ist, sodass eine flexible Anpassung an unterschiedliche Applikationen gegeben ist.

Besonders vorteilhaft lassen sich dadurch auch komplexe Anwendungen realisieren, bei welchen mehrere Zugangssysteme ausbildende Erfassungseinheiten an die Auswerteeinheit der Kontrollvorrichtung angeschlossen sind.

Die einzelnen Zugangssysteme, insbesondere elektronischen Schlüsselsysteme, können beispielsweise zur Zugangskontrolle an Schutztüren, die Zugänge zu Gefahrenbereichen bilden, eingesetzt werden. Im Gegensatz zu bekannten Schutzvorrichtungen kann die Auswertung von Signalen der einzelnen Erfassungseinheiten in einer zentralen Auswerteeinheit der Kontrollvorrichtung erfolgen, wodurch ein erheblicher Rationalisierungseffekt erzielt wird.

Die Zugangssysteme können dabei räumlich verteilt sein. Auch ist es möglich unterschiedliche Zugangssysteme einzusetzen. So können verschiedene Leseeinheiten von elektronischen Schlüsselsystemen eingesetzt werden, die in verschiedenen Frequenzen arbeiten.

Des Weiteren sind Erfassungseinheiten zum Lesen verschiedener physikalischer Signale in unterschiedlichsten Technologien möglich. Diese können parallel eingesetzt sein.

Erfindungsgemäß ist wenigstens eine Ein-/Ausgabeeinheit an die Auswerteeinheit angeschlossen.

Die Ein-/Ausgabeeinheit kann beispielsweise von einem PC oder auch von einem Touch Panel gebildet sein.

Die Ein-/Ausgabeeinheit wird von einem Benutzer zur Eingabe einer gewünschten Betriebsart des Sicherheitssystems genutzt.

Die eingegebene Betriebsart wird in der Auswerteeinheit der Kontrollvorrichtung auf Gültigkeit geprüft und von der Auswerteeinheit zur Ein-/Ausgabeeinheit rückgelesen, wo der Benutzer die eingegebene Betriebsart quittiert. Mit der Auswerteeinheit der Kontrollvorrichtung wird so eine sichere Betriebsartauswahl gewährleistet, insbesondere dann, wenn die Auswerteeinheit einen fehlersicheren redundanten Aufbau aufweist.

Erfindungsgemäß wird ein an die Auswerteeinheit der Kontrollvorrichtung angeschlossenes Zugangssystem in die Betriebsartauswahl miteinbezogen werden, in dem abhängig von Eingangsgrößen des Zugangssystems in der Auswerteeinheit eine Berechtigung zur Auswahl einer Betriebsart freigeschaltet wird, worauf dann ein Benutzer an der Ein-/Ausgabeeinheit die gewünschte Betriebsart eingeben kann.

Die so in der Kontrollvorrichtung geprüfte und freigegebene Betriebsart wird als Ausgangsgröße über die Ausgangsstufe an die Steuerung, insbesondere die sichere Ausgangsstufe an die Sicherheitssteuerung ausgegeben, sodass dann unmittelbar die Steuerung beziehungsweise Sicherheitssteuerung den Betrieb in der gewählten Betriebsart aufnehmen kann.

Die Funktionalität der Kontrollvorrichtung kann dahingehend erweitert sein, dass die oder mehrere Erfassungseinheiten für einen Datentransfer ausgebildet sind.

Beispielsweise können die elektronischen Schlüsselsysteme genutzt werden, um einen Datentransfer vorzunehmen.

Beispielsweise können Benutzerdaten, Konfigurationen, Prozessdaten oder Backup-Daten in die Auswerteeinheit der Kontrollvorrichtung eingelesen werden. Insbesondere können in die Auswerteeinheit sogenannte Blacklists oder Whitelists geladen werden, wobei in den Blacklists gesperrte Benutzerzugänge und in den Whitelists freigegebene Benutzerzugänge gespeichert sind.

Schließlich ist es möglich mit dem Datentransfer eine Firmware in die Auswerteeinheit zu laden, um so eine applikationsspezifische Auswertung zu realisieren.

Gemäß einer vorteilhaften Weiterbildung weist die Auswerteeinheit wenigstens eine Schnittstelle zum Anschluss von Zusatzkomponenten auf.

Derartige Zusatzkomponenten können Bedienelemente, Endschalter, Warnleuchten und dergleichen sein. Dadurch, dass diese Zusatzkomponenten nicht mehr an die Steuerung angeschlossen sein müssen, kann diese weiter entlastet werden.

Die Erfindung wird im Folgenden anhand der Zeichnungen erläutert. Es zeigen:
- Figur 1:: Schematische Darstellung eines Sicherheitssystems für eine Gefahrenbereichsabsicherung.
- Figur 2:: Ausführungsbeispiel der erfindungsgemäßen Kontrollvorrichtung für das Sicherheitssystem gemäß Figur 1.

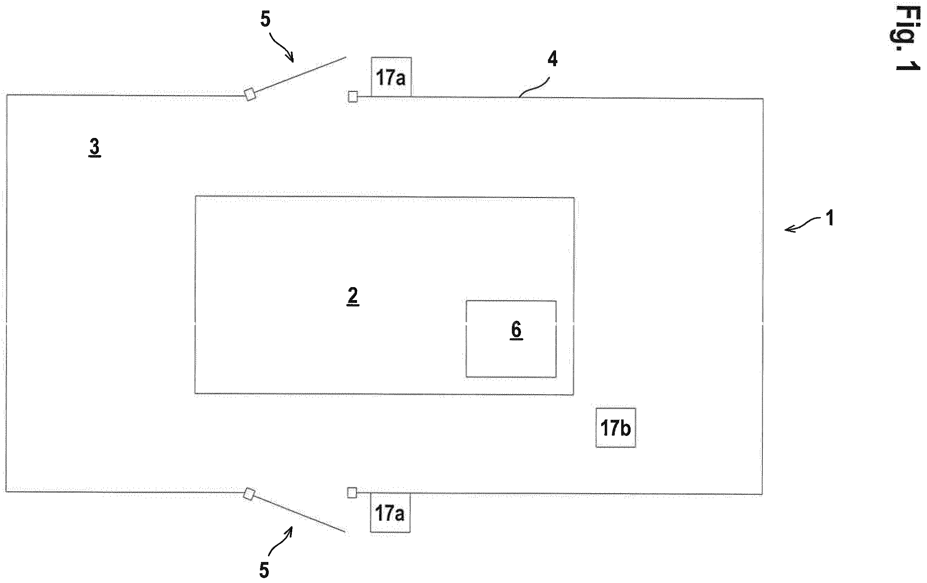

Figur 1 zeigt schematisch ein Sicherheitssystem 1 zum sicheren Betrieb einer Maschine 2. Von der Maschine 2 können Gefahren, insbesondere für Personen, ausgehen. Dementsprechend ist ein Gefahrenbereich 3 um die Maschine 2 mit einer Umzäunung 4 gesichert. In der Umzäunung 4 sind zwei Schutztüren 5 vorgesehen, über welche Personen Zugang zum Gefahrenbereich 3 erhalten werden können.

Als wesentlicher Bestandteil des Sicherheitssystems 1 ist eine Sicherheitssteuerung 6 vorgesehen, die den Betrieb der Maschine 2 steuert. Als weitere Komponenten des Sicherheitssystems 1 sind typischerweise Sicherheitsschalter vorgesehen, mit denen überwacht wird, ob die Schutztüren 5 geschlossen sind oder nicht. Die Sicherheitssteuerung 6 steuert den Betrieb der Maschine 2, insbesondere in Abhängigkeit der vom Sicherheitsschalter generierten Signale.

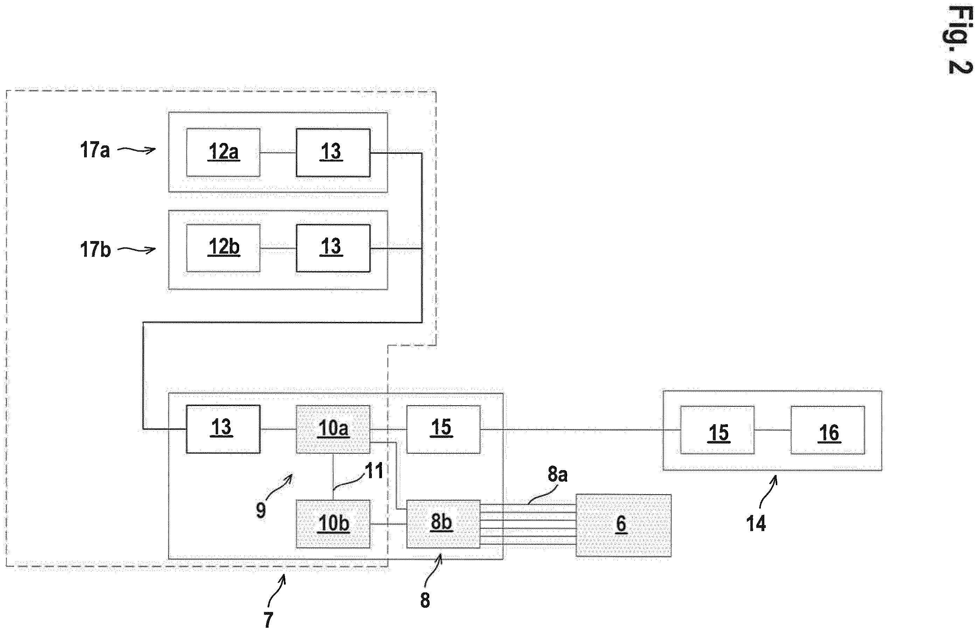

Figur 2 zeigt ein Ausführungsbeispiel der erfindungsgemäßen Kontrollvorrichtung 7, die für das Sicherheitssystem 1 gemäß Figur 1 eingesetzt werden kann.

Die Kontrollvorrichtung 7 bildet eine von der Sicherheitssteuerung 6 des Sicherheitssystems 1 unabhängige Einheit.

Die Kontrollvorrichtung 7 kann über eine sichere Ausgangsstufe 8 an die Sicherheitssteuerung 6 angeschlossen werden. Im vorliegenden Fall weist die sichere Ausgangsstufe 8 eine Anzahl von digitalen Ausgängen 8a und eine Ausgangsbeschaltung 8b zur Ansteuerung der digitalen Ausgänge 8a auf. Die Ausgangsbeschaltung 8b ist im vorliegenden Fall von einer One-out-of-N-Schaltung gebildet, die dafür sorgt, dass immer nur ein digitaler Ausgang 8a aktiv ist, über welchen sichere Ausgangssignale an die Sicherheitssteuerung 6 ausgegeben werden können.

Alternativ kann die sichere Ausgangsstufe 8 auch von einem sicheren Bussystem gebildet sein. Beispiele hierfür sind Profisafe, IO-Link Safety oder CIP-Safety.

Die sicheren Ausgangssignale werden in einer Auswerteeinheit 9 der Kontrollvorrichtung 7 generiert. Die sichere Ausgangsstufe 8 ist hierzu an die Auswerteeinheit 9 angeschlossen.

Die Auswerteeinheit 9 der Kontrollvorrichtung 7 weist im vorliegenden Fall einen fehlersicheren, redundanten Aufbau auf. Dabei weist die Auswerteeinheit 9 zwei Rechnereinheiten 10a, 10b auf, die jeweils von einem Prozessor gebildet sein können. Die Rechnereinheiten 10a, 10b der Auswerteeinheit 9 sind über Datenleitungen 11 verbunden, über welche ein bidirektionaler Datenaustausch zwischen den Rechnereinheiten 10a, 10b erfolgen kann, insbesondere für eine gegenseitige Überwachung der Rechnereinheiten 10a, 10b.

Prinzipiell kann die Kontrollvorrichtung 7 auch eine einkanalige Auswerteeinheit 9 aufweisen. Die Kontrollvorrichtung 7 weist eine vorgegebene Anzahl von an die Auswerteeinheit 9 angeschlossenen Erfassungseinheiten 17a, 17b auf.

Im vorliegenden Fall sind als Erfassungseinheiten 17a, 17b Leseeinheiten 12a, 12b vorgesehen, die Bestandteile eines Zugangssystems in Form eines elektronischen Schlüsselsystems sind. Die beiden Leseeinheiten 12a, 12b bestehen typischerweise aus einer CPU und einer Antenne. Jeder Leseeinheit 12a, 12b sind zur Ausbildung eines elektronischen Schlüsselsystems mehrere nicht dargestellte Transponder zugeordnet.

Im vorliegenden Fall bildet jeweils eines der elektronischen Schlüsselsysteme ein Zugangssystem für eine der Schutztüren 5 des Sicherheitssystems 1 gemäß Figur 1.

Das elektronische Schlüsselsystem kann insbesondere auch als ein Zugangssystem für eine Schutztür 5 ausgebildet sein. In jeden Transponder kann beispielsweise eine Authentifizierung in Form von Codierungen gespeichert sein, die definieren, unter welchen unter welchen Bedingungen mit dem jeweiligen Transponder die Schutztüren 5 geöffnet werden dürfen und damit eine Person Zugang zum Gefahrenbereich 3 erhält.

Die Leseeinheiten 12a, 12b können auch für einen Datentransfer genutzt werden, insbesondere um in die Auswerteeinheit 9 Benutzerdaten, Konfigurationen, Backup-Daten, Prozessdaten oder auch Firmware zu übertragen.

Jede Leseeinheit 12a, 12b ist über eine Schnittstelle 13 an die Auswerteeinheit 9 angeschlossen. Im vorliegenden Fall sind die Schnittstellen 13 als RS485-Schnittstellen ausgebildet. Generell sind leitungsgebundene oder berührungslos arbeitende Schnittstellen 13 möglich. Diese sind so beschaffen, dass die Leseeinheiten 12a, 12b räumlich getrennt von der Auswerteeinheit 9 angeordnet sein können. Damit kann von einer zentralen Auswerteeinheit 9 aus bei dem Sicherheitssystem 1 der Figur 1 jeweils eine Leseeinheit 12a, 12b im Bereich einer der Schutztüren 5 angeordnet sein.

Die Leseeinheiten 12a, 12b können identisch oder unterschiedlich ausgebildet sein. Generell können auch mehr als zwei Leseeinheiten an die Auswerteeinheit 9 angeschlossen sein.

Bei der zweikanaligen Ausführung der Auswerteeinheit 9 ist, wie Figur 2 zeigt, die RS485-Schnittstelle an eine der Rechnereinheiten 10a der Auswerteeinheit 9 angeschlossen.

Generell sind auch andere Schnittstellen 13 möglich, wie zum Beispiel WLAN, Ethernet, Bluetooth oder CAN-Bus.

In der Auswerteeinheit 9 werden die mit den Leseeinheiten 12a, 12b erfassten Transponder-Signale ausgewertet, wobei bei dieser Auswertung Zugangsberechtigungen geprüft und freigegeben werden. Die dadurch in der Auswerteeinheit 9 generierten sicheren Ausgangssignale werden über die sichere Ausgangsstufe 8 der Sicherheitssteuerung 6 zugeführt.

Des Weiteren ist an die Auswerteeinheit 9 eine Ein-/Ausgabeeinheit angeschlossen, die im vorliegenden Fall von einem PC 14 (Personal Computer) gebildet ist. Der Anschluss erfolgt über eine Kommunikationsschnittstelle 15, die von einer RS485-, USB-, Profinet-Schnittstelle und dergleichen gebildet sein kann. Generell kann die Kontrollvorrichtung 7 mehrere unterschiedliche Kommunikationsschnittstellen 15 aufweisen.

Generell kann die Kontrollvorrichtung 7 auch Schnittstellen 13 zum Anschluss von Zusatzkomponenten wie Bedienelementen, Endschaltern, Warnleuchten und dergleichen aufweisen.

Der PC 14 weist in bekannter Weise Ein-/Ausgabemittel 16 wie Tastaturen, Displays und dergleichen auf.

Die Ein-/Ausgabeeinheit, das heißt der PC 14 wird im vorliegenden Fall für eine Betriebsartauswahl genutzt. Ein Benutzer gibt hierzu in der Ein-/Ausgabeeinheit zunächst Authentifizierungsdaten ein, die im einfachsten Fall von einem Passwort gebildet sein können. Auch die Eingabe biometrischer Daten ist möglich.

Der Benutzer gibt dann in die Ein-/Ausgabeeinheit die gewünschte Betriebsart ein, die dann in der Auswerteeinheit 9 auf Gültigkeit geprüft wird. Insbesondere kann hierzu auch eine über eine Leseeinheit 12a, 12b eingegebene und in der Auswerteeinheit 9 freigeschaltete Berechtigung für eine Betriebsartauswahl herangezogen werden. Die geprüfte Betriebsart wird dann von der Auswerteeinheit 9 in die Ein-/Ausgabeeinheit rückgelesen, wo der Benutzer prüft, ob die Auswahl der Betriebsart richtig war.

Auf diese Weise wird eine fehlersichere Betriebsartauswahl komplett in der Kontrollvorrichtung 7 durchgeführt. Die ausgewählte Betriebsart wird dann über die sichere Ausgangsstufe 8 an die Sicherheitssteuerung 6 ausgegeben.

### Bezugszeichenliste

- (1): Sicherheitssystem
- (2): Maschine
- (3): Gefahrenbereich
- (4): Umzäunung
- (5): Schutztür
- (6): Sicherheitssteuerung
- (7): Kontrollvorrichtung
- (8): Ausgangsstufe
- (8a): digitaler Ausgang
- (8b): Ausgangsbeschaltung
- (9): Auswerteeinheit
- (10a, 10b): Rechnereinheit
- (11): Datenleitung
- (12a, 12b): Leseeinheit
- (13): Schnittstelle
- (14): PC
- (15): Kommunikationsschnittstelle
- (16): Ein-/Ausgabemittel
- (17a, 17b): Erfassungseinheit

## Patentansprüche

1. Anordnung mit einer Kontrollvorrichtung (7) und einer den Betrieb einer Maschine steuernden Sicherheitssteuerung (6), **dadurch gekennzeichnet, dass** die Kontrollvorrichtung eine Auswerteeinheit (9) und wenigstens eine Erfassungseinheit (17a, 17b), die an die Auswerteeinheit (9) angeschlossen ist, aufweist, dass die wenigstens eine Erfassungseinheit (17a, 17b) Bestandteil eines Zugangssystems ist, und dass die Erfassungseinheit (17a, 17b) eine Leseeinheit (12a, 12b) ist, welche zum Lesen von Signalen eines Transponders ausgebildet ist, wobei abhängig von in der Erfassungseinheit (17a, 17b) eingegebenen Eingabegrößen in der Auswerteeinheit (9) eine Betriebsartauswahl durchgeführt wird und eine Zugangsberechtigung zugeteilt wird und dadurch generierte Ausgangsgrößen über eine Ausgangsstufe (8) der Kontrollvorrichtung (7) an die Sicherheitssteuerung (6) ausgegeben werden, dass wenigstens eine Ein-/Ausgabeeinheit an die Auswerteeinheit (9) angeschlossen ist, und dass das an die Auswerteeinheit (9) der Kontrollvorrichtung (7) angeschlossene Zugangssystem in die Betriebsartauswahl miteinbezogen ist, wobei das Zugangssystem ein physikalisches Zugangssystem ist, das den Zugang zu Gefahrenbereichen an Maschinen und Anlagen regelt und kontrolliert, in dem abhängig von Eingangsgrößen des Zugangssystems in der Auswerteeinheit (9) eine Berechtigung zur Auswahl einer Betriebsart freigeschaltet wird, worauf dann ein Benutzer an der Ein-/Ausgabeeinheit die gewünschte Betriebsart eingeben kann, wobei eine von einem Benutzer in die Ein-/Ausgabeeinheit eingegebene Betriebsart in der Auswerteeinheit (9) auf Gültigkeit geprüft wird, wobei hierzu eine über die Leseeinheit (12a, 12b) eingegebene und in der Auswerteeinheit (9) freigeschaltete Berechtigung für eine Betriebsauswahl herangezogen wird, und wobei die geprüfte Betriebsart von der Auswerteeinheit (9) in die Ein-/Ausgabeeinheit rückgelesen wird, wo der Benutzer die eingegebene Betriebsart quittiert, wodurch eine sichere Betriebsartauswahl gewährleistet ist.

2. Anordnung nach Anspruch 1, **dadurch gekennzeichnet, dass** die Auswerteeinheit (9) einen zweikanaligen Aufbau aufweist, wobei die Auswerteeinheit zwei Rechnereinheiten aufweist, die über Datenleitungen verbunden sind, über welche ein bidirektionaler Datenaustausch zwischen den Rechnereinheiten erfolgt, wodurch eine gegenseitige Überwachung der Rechnereinheiten erfolgt.

3. Anordnung nach einem der Ansprüche 1 oder 2, **dadurch gekennzeichnet, dass** die oder jede Erfassungseinheit (17a, 17b) über eine leitungsgebundene oder berührungslos arbeitende Schnittstelle (13) mit der Auswerteeinheit (9) verbunden ist.

4. Anordnung nach einem der Ansprüche 1 bis 3, **dadurch gekennzeichnet, dass** mehrere Erfassungseinheiten (17a, 17b) vorgesehen sind, die unterschiedliche und/oder räumlich getrennte Zugangssysteme ausbilden.

5. Anordnung nach einem der Ansprüche 1 bis 4, **dadurch gekennzeichnet, dass** über die Ein-/Ausgabeeinheit Authentifizierungsdaten in die Auswerteeinheit (9) eingebbar sind.

6. Anordnung nach einem der Ansprüche 1 bis 5, **dadurch gekennzeichnet, dass** eine in der Auswerteeinheit (9) überprüfte und freigegebene Betriebsart über die Ausgangsstufe (8) an die Sicherheitssteuerung (6) ausgegeben wird.

7. Anordnung nach einem der Ansprüche 1 bis 6, **dadurch gekennzeichnet, dass** die oder mehrere Erfassungseinheiten (17a, 17b) für einen Datentransfer ausgebildet sind.

8. Anordnung nach einem der Ansprüche 1 bis 7, **dadurch gekennzeichnet, dass** die Auswerteeinheit (9) wenigstens eine Schnittstelle (13) zum Anschluss von Zusatzkomponenten aufweist.

## Claims

1. Arrangement with a control device (7) and a safety control (6) controlling the operation of a machine, **characterised in**
**that** the control device has an evaluation unit (9) and at least one detection unit (17a, 17b) connected to the evaluation unit (9), that said at least one detection unit (17a, 17b) is part of an access system, and that the detection unit (17a, 17b) is a reading unit (12a, 12b) designed to read signals from a transponder, whereby, depending on the input variables entered into the detection unit (17a, 17b), an operating mode selection is performed in the evaluation unit (9) and an access authorisation is assigned, and output variables generated thereby are output via an output stage (8) of the control device (7) to the security control (6), that at least one input/output unit is connected to the evaluation unit (9), and that the access system connected to the evaluation unit (9) of the control device (7) is included in the operating mode selection, wherein the access system is a physical access system that regulates and controls access to hazardous areas on machines and systems, in which, depending on input variables of the access system in the evaluation unit (9), whereupon a user can then enter the desired operating mode at the input/output unit, wherein an operating mode entered by a user into the input/output unit is checked for validity in the evaluation unit (9), wherein for this purpose an authorisation for an operating mode selection entered via the reading unit (12a, 12b) and activated in the evaluation unit (9) is used for this purpose, and wherein the checked operating mode is read back from the evaluation unit (9) into the input/output unit, where the user acknowledges the entered operating mode, thereby ensuring a secure operating mode selection.

2. Arrangement according to claim 1, **characterised in that** the evaluation unit (9) has a two-channel structure, wherein the evaluation unit has two computer units which are connected via data lines, via which a bidirectional data exchange between the computer units takes place, thereby enabling mutual monitoring of the computer units.

3. Arrangement according to one of claims 1 or 2, **characterised in that** the or each detection unit (17a, 17b) is connected to the evaluation unit (9) via a wired or contactless interface (13).

4. Arrangement according to one of claims 1 to 3, **characterised in that** several detection units (17a, 17b) are provided, which form different and/or spatially separated access systems.

5. Arrangement according to one of claims 1 to 4, **characterised in that** authentication data can be entered into the evaluation unit (9) via the input/output unit.

6. Arrangement according to one of claims 1 to 5, **characterised in that** an operating mode checked and approved in the evaluation unit (9) is output to the safety control (6) via the output stage (8).

7. Arrangement according to one of claims 1 to 6, **characterised in that** the one or more detection units (17a, 17b) are designed for data transfer.

8. Arrangement according to one of claims 1 to 7, **characterised in that** the evaluation unit (9) has at least one interface (13) for connecting additional components.

## Revendications

1. Dispositif comprenant un dispositif de contrôle (7) et un dispositif de sécurité (6) commandant le fonctionnement d'une machine, **caractérisé en ce que**
que le dispositif de contrôle comporte une unité d'évaluation (9) et au moins une unité de détection (17a, 17b) reliée à l'unité d'évaluation (9), que ladite au moins une unité de détection (17a, 17b) fait partie d'un système d'accès, et que l'unité de détection (17a, 17b) est une unité de lecture (12a, 12b) conçue pour lire des signaux provenant d'un trans-pondeur, dans lequel, en fonction des variables d'entrée saisies dans l'unité de détection (17a, 17b), une sélection de mode de fonctionnement est effectuée dans l'unité d'évaluation (9) et une autorisation d'accès est attribuée, et les variables de sortie ainsi générées sont transmises via un étage de sortie (8) du dispositif de contrôle (7) au contrôle de sécurité (6), qu'au moins une unité d'entrée/sortie est connectée à l'unité d'évaluation (9), et que le système d'accès connecté à l'unité d'évaluation (9) du dispositif de contrôle (7) est inclus dans la sélection du mode de fonctionnement, le système d'accès étant un système d'accès physique qui régule et contrôle l'accès aux zones dangereuses des machines et des systèmes, dans lequel, en fonction des variables d'entrée du système d'accès dans l'unité d'évaluation (9), après quoi un utilisateur peut alors entrer le mode de fonctionnement souhaité dans l'unité d'entrée/sortie, dans lequel un mode de fonctionnement entré par un utilisateur dans l'unité d'entrée/sortie est vérifié quant à sa validité dans l'unité d'évaluation (9), dans lequel, à cette fin, une autorisation pour une sélection de mode de fonctionnement entrée via l'unité de lecture (12a, 12b) et activée dans l'unité d'évaluation (9) est utilisée à cette fin, et dans lequel le mode de fonctionnement vérifié est relu depuis l'unité d'évaluation (9) dans l'unité d'entrée/sortie, où l'utilisateur confirme le mode de fonctionnement saisi, garantissant ainsi une sélection sécurisée du mode de fonctionnement.

2. Dispositif selon la revendication 1, **caractérisé en ce que** l'unité d'évaluation (9) présente une structure à deux canaux, l'unité d'évaluation comportant deux unités informatiques qui sont reliées par des lignes de données, par l'intermédiaire desquelles se produit un échange de données bidirectionnel entre les unités informatiques, permettant ainsi une surveillance mutuelle des unités informatiques.

3. Dispositif selon l'une des revendications 1 ou 2, **caractérisé en ce que** l'unité ou chaque unité de détection (17a, 17b) est reliée à l'unité d'évaluation (9) par l'intermédiaire d'une interface câblée ou sans contact (13).

4. Dispositif selon l'une des revendications 1 à 3, **caractérisé en ce que** plusieurs unités de détection (17a, 17b) sont prévues, qui forment des systèmes d'accès différents et/ou séparés dans l'espace.

5. Dispositif selon l'une des revendications 1 à 4, **caractérisé en ce que** des données d'authentification peuvent être saisies dans l'unité d'évaluation (9) via l'unité d'entrée/sortie.

6. Dispositif selon l'une des revendications 1 à 5, **caractérisé en ce qu'**un mode de fonctionnement vérifié et approuvé dans l'unité d'évaluation (9) est transmis à la contrôle de sécurité (6) via l'étage de sortie (8).

7. Dispositif selon l'une des revendications 1 à 6, **caractérisé en ce que** la ou les unités de détection (17a, 17b) sont conçues pour le transfert de données.

8. Dispositif selon l'une des revendications 1 à 7, **caractérisé en ce que** l'unité d'évaluation (9) comporte au moins une interface (13) pour connecter des composants supplémentaires.
